# EUROPEAN PATENT SPECIFICATION

(11) **EP 3 017 877 B1**
(45) Date of publication and mention of the grant of the patent: **01.08.2018**
(21) Application number: 15192954.4
(22) Date of filing: 04.11.2015
(51) Int. Cl.: B05C 5/00, B05C 11/10

(54) **SYSTEM AND METHOD FOR FILLING A HOT MELT ADHESIVE TANK**
SYSTEM UND VERFAHREN ZUM FÜLLEN EINES SCHMELZKLEBSTOFFTANKS
SYSTÈME ET PROCÉDÉ DE REMPLISSAGE D'UN RÉSERVOIR D'ADHÉSIF THERMOFUSIBLE

(30) Priority: 05.11.2014 US 201462075292 P
(43) Date of publication of application: 11.05.2016
(73) Proprietor: Nordson Corporation, Westlake, OH 44145-1119 (US)
(72) Inventor: Gould, Mark A., Gainesville, GA Georgia 30507 (US); Ridge, William M., CUMMING, GA Georgia 30040 (US); Varga, Leslie J., CUMMING, GA Georgia 30041 (US)
(74) Representative: Eisenführ Speiser

(56) References cited:
- EP-A1- 2 737 957
- EP-A2- 0 061 040
- EP-A2- 2 719 470
- US-A- 5 791 830

## Description

### Field of the Invention

The present application generally relates to hot melt adhesive dispensing equipment, and more particularly to moving hot melt adhesive between an adhesive supply and an adhesive melter in a hot melt adhesive dispensing system.

### Background

Hot melt adhesive systems have many applications in manufacturing and packaging. For example, thermoplastic hot melt adhesives are used for carton sealing, case sealing, tray forming, pallet stabilization, nonwoven applications including diaper manufacturing, and many other applications. Hot melt adhesives often come in the form of pellets or particulates and are contained in or provided from an adhesive supply, such as a tank or hopper. The hot melt adhesive pellets are heated and melted by a melter, and liquid hot melt adhesive is pumped to a dispenser, such as a dispensing gun or other applicator which applies the hot melt adhesive to a carton, case, or other objects or substrates. Hot melt adhesive, in its pre-melted state (referred to herein as "particulate" hot melt adhesive), can be provided in a variety of shapes and sizes, ranging from small bb-sized pieces, to larger sized pieces or chips, and still larger "pillows" that are several inches in dimension. Particulate hot melt adhesive must be moved from the adhesive supply to the melter, and the size and shape of the particulate hot melt adhesive and the construction of the adhesive supply and the melter can present challenges that affect this movement.

For example, air-driven, or pneumatic, feed systems use the force of flowing air to move particulate hot melt adhesive from an adhesive supply to a melter. In a known arrangement, a transfer hose connects the adhesive supply with the melter, and an air pump is operated to generate an air flow that moves particulate hot melt adhesive through the transfer hose from the adhesive supply to the melter. The transfer hose typically communicates with an inlet on the melter, such as on the lid, but heat generated by the melter is transferred to the lid and to adjacent portions of the transfer hose. Transferring heat to the lid and transfer hose can cause premature heating or melting of the hot melt adhesive before it reaches the melter. Hot sticky vapors emanating from adhesive melter can also coat the internal surfaces of the transfer components such as a filling portion of the melter lid and the flexible hose connected to the melter. When these surfaces are hot and sticky, transferred adhesive pellets can and do stick to these surfaces during transfer to the melter tank. Eventually as the pellets build up on these surfaces for these various reasons related to heat and/or sticky vapors emanating from the melter, the pellet transfer path to the melter can become blocked and flow interrupted.

In addition, arrangements have been used where an adhesive supply is positioned above the heating elements of a melter, and the force of gravity causes the particulate hot melt adhesive to move downwardly through the adhesive supply to the melter. For example, a hopper can be positioned above the melter, with an outlet of the hopper being connected with an inlet of the melter, so that particulate hot melt adhesive in the hopper falls under its own weight through the outlet of the hopper and directly into the inlet of the melter. Such an arrangement can occupy a smaller footprint on a floor surface than the above-mentioned air-driven feed systems because the adhesive supply is not situated on a floor surface. However, because melters are heated systems, and because the hopper is above the melter, heat is transferred from the melter to the hopper, and the hopper becomes heated. Essentially, in such arrangements, the hopper acts as a chimney. Transferring heat to the hopper can cause premature heating or melting of the hot melt adhesive in the hopper, which can interfere with the efficient transfer of hot melt adhesive into the melter.

Furthermore, EP 0061040 is directed towards a hot melt system having a closure slide which is utilized to block an inlet opening from an adhesive supply to a melter. The disclosed system however does not ensure that heat transfer from the melter to the filling passage and associated components is properly avoided.

When feed systems are interrupted from transferring hot melt adhesive from an adhesive supply to a melter, the melter can be starved of new hot melt adhesive and the supply of liquid hot melt adhesive in the hot melt adhesive system can be diminished or completely depleted. This, as well as the other issues discussed above, contributes to downtime of the hot melt adhesive system.

There is a need, therefore, for feed systems for transferring particulate hot melt adhesive from an adhesive supply to a melter that address one or more of the drawbacks discussed above.

### Summary

In an illustrative embodiment, a hot melt adhesive system generally includes an adhesive supply, an adhesive melter, and a top component coupled with the melter. The chamber is configured to contain a bulk quantity of particulate hot melt adhesive and includes an inlet opening for receiving particulate hot melt adhesive from the supply. The melter heats and melts the particulate hot melt adhesive into a liquid hot melt adhesive. The top component includes a first portion configured as a cover to block the inlet opening of the chamber and prevent ingress of the particulate hot melt adhesive from the supply into the chamber and/or transfer of heat from the chamber into a filling passage configured to allow ingress of the particulate hot melt adhesive from the adhesive supply into the chamber, and a second portion including the filling passage configured to allow ingress of the particulate hot melt adhesive from the supply into the chamber. The top component is movable between a first position and a second position. In the first position the first portion of the top component covers the inlet opening of the chamber and the second portion, including the filling passage, is out of alignment with the inlet opening of the chamber. In the second position the first or cover portion of the top component is out of alignment with the inlet opening of the chamber and the second portion, including the filling passage, is aligned with the inlet opening of the chamber. When the top component is in the first position, convective heat transfer from the chamber inlet opening is blocked or at least reduced, and when the top component is in the second position, the particulate hot melt adhesive can be directed from the adhesive supply through the filling passage of the top component and into the chamber.

Although the top component may be designed to move between the two positions in various manners while achieving certain advantages, in the illustrated embodiment the top component slides between the two positions. The top component further comprises a main portion secured to the melter. The main portion includes a conduit section and the first and second portions are movable relative to the conduit section between the two positions. The filling passage is in communication with the conduit section when the top component is in the second position. The filling passage may be contained in a conduit coupled to the top component.

In other aspects, an adhesive melter is provided generally as described above for use in a hot melt adhesive system, and a method of moving particulate hot melt adhesive between an adhesive supply and the chamber of the melter is also described. The method generally includes introducing the particulate hot melt adhesive into the filling passage of the top component from the adhesive supply while the top component is in the second position. The particulate hot melt adhesive is directed through the filling passage and through the inlet opening of the chamber until the chamber is filled with a desired quantity of particulate hot melt adhesive for operating the melter. The top component is then moved from the second position to the first position in which the top component blocks or reduces convective heat from escaping through the inlet opening of the chamber. The heat is also blocked from various filling components such as a conduit and coupling attached to the top component. The melter is operated to heat and melt the particulate hot melt adhesive while the top component is in the first position. As needed, the top component is moved from the first position to the second position to refill the chamber with the desired quantity of particulate hot melt adhesive.

Because a portion of the top component blocks the melter inlet opening when the melter is operating and after the chamber filling operation, and because the filling passage of the top component is not in alignment with the chamber inlet opening, there is less heat transferred to the filling passage and associated components. This reduces the chances of accumulated build up of hot melt adhesive on these components and the associated problems.

Various additional aspects and features will become more readily apparent to those of ordinary skill in the art upon review of the following detailed description of the illustrative embodiments.

### Brief Description of the Drawings

FIG. 1 is a disassembled perspective view of a hot melt adhesive melter constructed in accordance with one embodiment.
FIG. 2A is a cross sectional view of the top section of the melter shown in Fig. 1 with a top component in a first position in which the top component blocks or reduces heat from escaping through an inlet opening of the chamber.
FIG. 2B is a cross sectional view of the top section of the melter similar to Fig. 2A but with a top component in a second position in which particulate hot melt adhesive may be directed from an adhesive supply into the chamber.
FIG. 3 is a perspective view of a top section of a hot melt adhesive melter constructed in accordance with another embodiment.
FIG. 4A is a cross sectional view of the top section of the melter shown in Fig. 3 with a top component in a first position in which the top component blocks or reduces convective heat from escaping through the inlet opening of the chamber.
FIG. 4B is a cross sectional view of the top section of the melter shown in Fig. 3 with the top component in a second position in which particulate hot melt adhesive may be directed from an adhesive supply into the chamber.
FIG. 5 is a top perspective view of the top section of the melter shown in Fig. 3.
FIG. 6 is a cross section view of the top section of the melter shown in Fig. 3 along the line A-A depicted in Fig. 5.
FIG. 7 is a bottom view of the top section of the melter shown in Fig. 3.

### Detailed Description

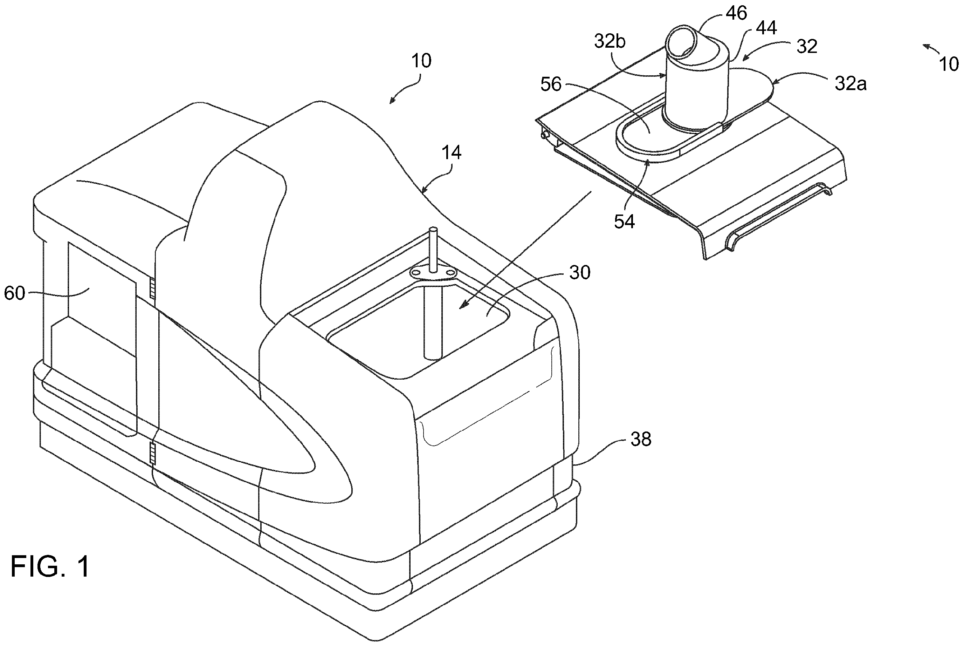

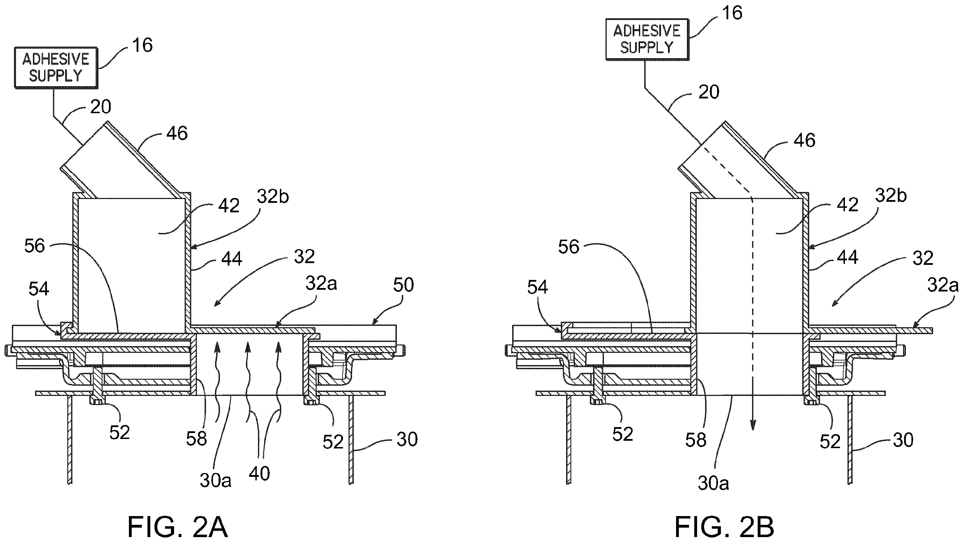

With reference to FIGS. 1, 2A and 2B, an embodiment of an adhesive melting system 10 for melting adhesive particulates, such as pellets and chips, into fluid adhesive includes an adhesive melter 14 and a supply 16 of particulate hot melt adhesive. The adhesive melter 14 and its various operating components for heating and liquefying hot melt adhesive are known and are therefore not discussed in detail herein. Aside from the inventive aspects of this embodiment, other operating details and functions of the melter may be found, for example, in the ProBlue® Melter, available from Nordson Corp., Westlake, Ohio. According to an exemplary embodiment, the adhesive particulates may be adhesive pellets. As used herein, the term "adhesive pellets" is not intended to be limiting as to any specific shape or size, so long as the adhesive pellets are suitable to be carried by a stream of forced air such as, but not limited to, a vacuum-driven stream. For example, and without limitation, adhesive pellets may have regular shapes, irregular shapes, or any combination thereof. Moreover, any two pellets may have distinct shapes and/or dimensions and still be jointly and generally referred to as "adhesive pellets."

Referring to FIGS. 2A and 2B, a filling tube or conduit 20 is connected between the adhesive melter 14 and the supply 16. The filling conduit 20 is in fluid communication with both the supply 16 and with a conduit associated with the adhesive melter 14 for moving the adhesive pellets from the supply to the adhesive melter 14, as described in more detail below. As one example, the adhesive melting system 10 may create a vacuum that draws the adhesive pellets from within the supply 16 and directs the adhesive pellets to the adhesive melter 14. However, any pressure differential may be used with the air, or any other desirable gas, within the adhesive melting system 10, to create a suction force or blowing force to move adhesive pellets through the filling conduit 20. The filling conduit 20 may be generally flexible, generally rigid, or formed from any combination thereof, so long as the filling conduit 20 fluidly connects the supply 16 to the adhesive melter 14.

The adhesive melter 14 includes a tank 30, which may include structures and/or components for heating and melting the hot melt adhesive pellets. The tank 30 may be an example of a chamber. Other examples of a chamber may include a hopper or any receptacle for receiving and holding a adhesive material. The tank 30 is suitable to hold a desired amount of adhesive and includes a lid 32. The lid 32 may be an example of the top component. In other aspects of the disclosure, the top component may comprise a top section of a melter other than a lid of the melter. In such embodiments, the lid may be fixed, and the moveable top section may be a section that is adjacent to the lid. The lid 32 is coupled to the adhesive melter 14 and provides access to the adhesive held in the tank of the adhesive melter 14. In particular, the lid 32 is movable between a first position (FIG. 2A) and a second position (FIG. 2B), as described further below. The adhesive melter 14 also includes a melter base 38 (FIG. 1) sized to accommodate the tank 30. An exemplary embodiment of the adhesive melter 14 may, for example, have a four liter tank 30 with the melter base 38 being sized accordingly. However, a variety of adhesive melter sizes, such as seven liters or ten liters, may also be used.

Referring more specifically to FIGS. 2A and 2B, FIG. 2A illustrates the lid 32 in a first position. In this position, a first portion or cover portion 32a of the lid 32 blocks an inlet opening 30a of the tank 30 so that heat transfer, indicated as lines 40, is blocked or at least reduced from the tank 30. It will be appreciated that the lid 32 may be completely or at least partly formed of heat insulative material to assist with blocking heat and particularly convective heat from being transferred upwardly from the tank 30. When the lid 32 is in the first position shown in FIG. 2A, the second portion or filling portion 32b, which includes a filling passage 42, is out of alignment with the inlet opening 30a of the tank 30. Due to its position lateral to or offset from the tank inlet opening 30a, less heat is transferred from the tank 30 to the various filling components as will be described. More particularly, the filling passage 42 is contained in a conduit structure including, for example, an upwardly extending conduit section 44 and an angled inlet conduit 46 which may be coupled to a suitable flexible hose or other filling conduit 20. Because these tank filling components are not subjected to significant heat during the melter operation, there will be less chance and opportunity for adhesive pellets to agglomerate, melt, stick together and otherwise block or impede the flow of adhesive pellets during a filling operation.

When it is desired to fill the tank 30 with additional adhesive pellets, the user slides the lid 32 from the first position as shown in FIG. 2A to the second position shown in FIG. 2B. The melter operation may continue when the lid 32 is slid into the first position. It will be appreciated that the lid 32 and its associated mounting hardware may be designed to undergo movements other than or in addition to sliding movement, such as pivotal movement(s), etc. Moreover, the movement may be manual or power-driven and automatically manually controlled. At a base portion of the lid 32, a flanged mounting structure 50 is provided for allowing the lid 32 to slide between the two positions (FIGS. 2A and 2B). As more specifically shown in FIGS. 2A and 2B, the mounting structure is fastened to the adhesive melter 14 including being either directly or indirectly coupled to the tank 30 by suitable fasteners such as bolts 52. The mounting structure further comprises a support 54 for carrying the lid 32 and allowing movement thereof between the operating and filling positions. The support includes a flat panel section 56 and a conduit section 58. When the lid 32 is in the second position shown in FIG. 2B, the filling passage 42 of the lid 32 aligns with the conduit section 58 and with the tank inlet opening 30a so that the supply 16 communicates with the interior of the tank 30. In this position, the desired amount of adhesive pellets or particulate may be directed from the supply 16 through the filling passage 42 and through the inlet opening 30a of the tank 30 until the desired amount of particulate adhesive material is directed into the tank 30. At this time, the filling operation is stopped and the lid 32 is moved back to the first position shown in FIG. 2A. When the lid 32 is moved back to the operating position (FIG. 2A), the cover portion 32a blocks the opening to the conduit section 58 and therefore also the melter inlet opening 30a. In this operating position, the filling portion 32b is positioned over the flat panel section 56 and laterally offset from the heat emanating from the opening 30a.

During the process of moving the lid 32 from the first position to the second position and so on and so forth when needed to refill the tank 30 with particulate adhesive material, the filling passage 42 may come into contact with heat (denoted by lines 40) for short periods of time. Because these periods are short, however, the chance that the particulate adhesive material would agglomerate, melt, stick together and otherwise block its flow into the tank 30 is reduced.

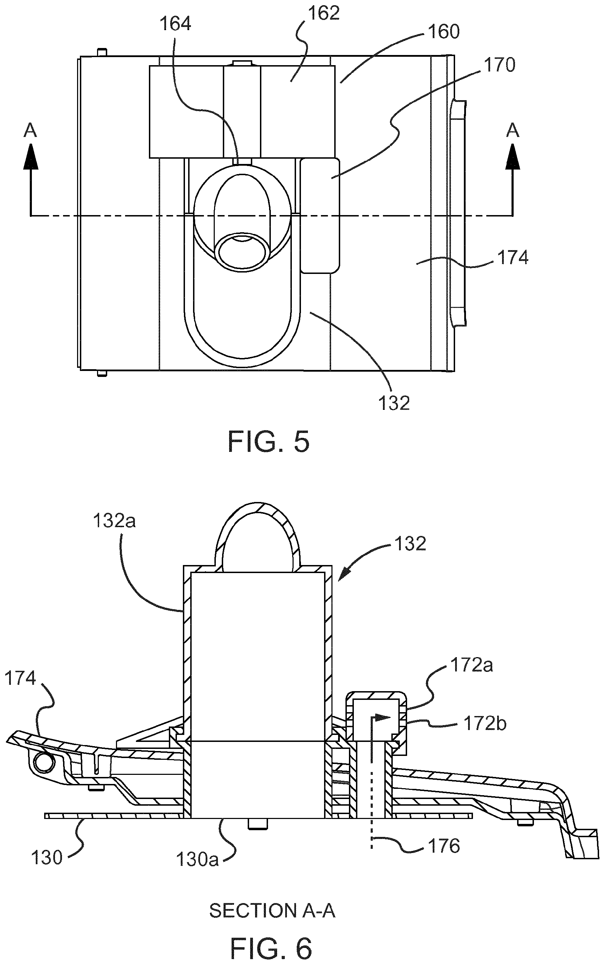

The adhesive melter 14 further includes a main control panel 60 (FIG. 1). The main control panel 60 is operative to power the adhesive melter 14 on and off. While the adhesive melter 14 is powered on, forced air moves the adhesive pellets from the supply 16, through the filling conduit 20, and into the tank 30 of the adhesive melter 14 to be melted for any desirable application. When forced air is used to carry the adhesive pellets into the tank 30 of the adhesive melter 14, forced air is also expelled from the tank via an exhaust conduit (not shown). While an exhaust conduit is not depicted in the embodiment depicted in FIGS. 1, 2A, and 2B, an example of such a conduit (e.g., conduit 176) is described with reference to FIGS. 5, 6, and 7, depicting a second exemplary melter according to the present disclosure.

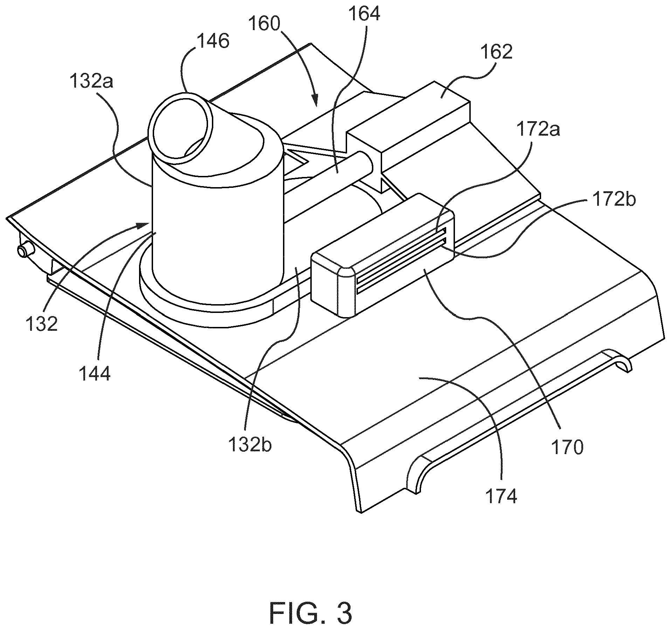

Referring now to FIGS. 3, 4A, 4B, 5, 6, and 7, another embodiment of a top section of an adhesive melting system 110 is described. The adhesive melting system 110 may include similar components as the adhesive melting system 10 described above with respect to FIGS. 1, 2A, and 2B. According to this embodiment, the adhesive melting system 110 includes a supply 116 that supplies particulate hot melt adhesive to a melter (not depicted) for melting the particulate hot melt adhesive into fluid adhesive.

The adhesive melting system 110 includes a lid 132 with a first portion or cover portion 132a and a second portion or filling portion 132b. The lid 132 may also be an example of the top component. The lid 132 forms a portion of a filling passage 142 that directs particulate adhesive material from the supply 116 into a tank 130 of the melter. The tank 130 may also be an example of a chamber for receiving the adhesive material. The filling passage 142 includes an upwardly extending conduit section 144 and an angled inlet conduit 146. The angled inlet conduit 146 may be coupled to a suitable flexible hose or other fitting conduit 120.

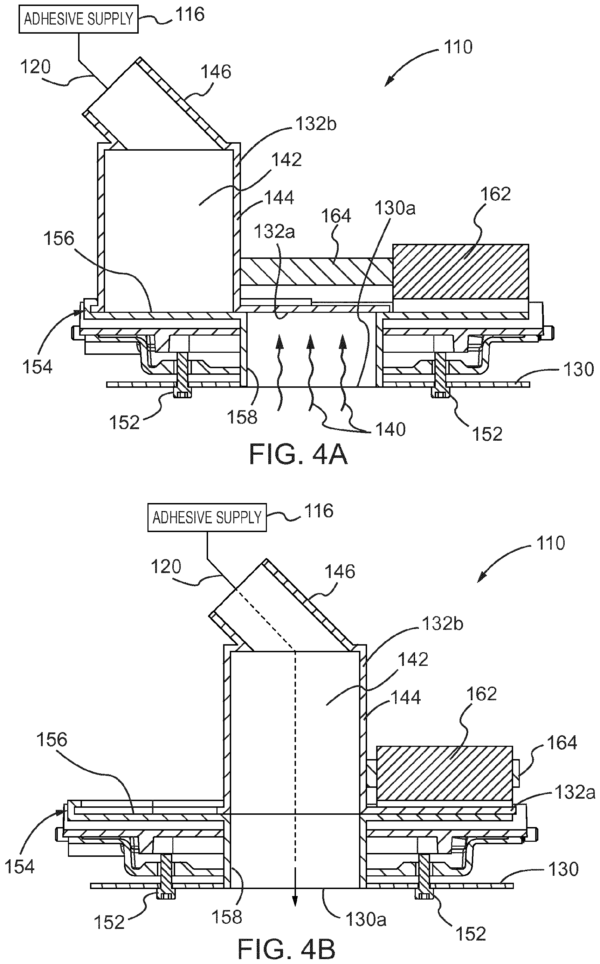

The lid 132 is movable between a first position, as depicted in FIG. 4A, and a second position, as depicted in FIG. 4B. The lid 132 is disposed on a mounting structure 174 (depicted in FIG. 5). The mounting structure 174 is fastened to the melter by suitable fasteners, such as bolts 152 depicted in FIGS. 4A and 4B. The mounting structure 174 may include a support 154 for carrying the lid 132 and allowing the lid 132 to move between the first position and the second position. The support 154 includes a flat panel section 156 and a conduit section 158.

When the lid 132 is in the first position shown in FIG. 4A, the cover portion 132a of the lid 132 blocks an inlet opening 130a of the melter, thereby reducing or blocking a transfer of heat (denoted by lines 140) from the melter to the filling passage 142. In certain aspects of the disclosure, the lid 132 may be formed of a heat reflective or insulating material that assists with reducing heat transfer into the filling passage 142. When the lid 132 is in the first position, the filling portion 132b of the lid 132 is also out of alignment with the inlet opening 130a of the tank 130 (specifically, the filling portion 132b is positioned over the flat panel section 156 of the support 154), which further reduces the likelihood of heat generated from within the tank 130 from transferring into the filling passage 142. As described above with reference to the lid 32 depicted in FIGS. 1, 2A, and 2B, this reduction in heat may significantly lower the chance of particulate adhesive material disposed upstream from the inlet opening 130a of the tank 130 from melting and sticking together to impede the flow of particulate adhesive material into the tank 130.

When the lid 132 is in the second position shown in FIG. 4B, the filling passage 142 of the lid 132 aligns with the conduit section 158 and with the tank inlet opening 130a. Accordingly, particulate adhesive material may be directed from the supply 116 through the filling passage 142 and through the inlet opening 130a of the tank 130 until a desired amount of particulate adhesive material is directed into the tank 130. The lid 132 may be moved back into the first position depicted in FIG. 4A. The lid 132 may be moved between the first position and the second position as many times needed for a particular application. In certain aspects of the disclosure, a sensor (not depicted) may be used to detect a level of adhesive in an interior of the tank 130, and to send a signal to a control device when the level of adhesive is low to cause the lid 132 to be moved into the second position so that particulate adhesive material may be delivered from the supply 116 into the tank 130.

An actuator 160 of the adhesive melting system 100, which is disposed on the mounting cylinder section 164, may move the lid 132 between its the first position and the second position. The actuator 160 may be pneumatic actuator. As depicted in FIGS. 3 and 5, the actuator 160 includes a housing section 162 and a shaft or cylinder section 164. The housing section 162 may be attached to an upper surface of the mounting structure 174. The cylinder section 164 may be coupled to the lid 132. As such, a movement of the cylinder section 164 in a direction towards the filling portion 132b of the lid 132 moves the lid 132 into the first position, whereas movement of the cylinder section 164 in a direction away from the filling portion 132b moves the lid 132 into the second position. In the first position, the cylinder section 164 may be fully extended, and in the second position, the cylinder section 164 may be fully retracted. The actuator 160 may also include a piston (not depicted) that is disposed in the housing section 162, which moves together with the cylinder section 164. The piston may be moved within the housing section 162 using an operating fluid such as a gas, alone or together with a spring or other mechanical device.

While a pneumatic actuator is described herein, other types of actuators may also be used to move the lid 132. For example, a hydraulic actuator, an electric drive actuator, or the like may be used to move the lid 132. Further, the movement of the actuator 160 and/or the lid 132 may be manually driven as opposed to automatically driven via a pneumatic force or electric motor. A control panel (not depicted), either located on the melter or at a remote location, may be used to control the movements of the actuator 160 and/or the lid 132. The control panel may also control delivery of the adhesive particular material into the tank 130 of the melter.

The adhesive melting system 110 may also include a filter 170 that vents air from within the melter to an exterior of the melter during a filling operation. The particulate adhesive material may be fed into the tank 130 through an air or vacuum supply conduit. As such, the filter 170 may provide a pathway for the air that enters the tank 130 through the supply conduit to exit the melter. The filter 170 may advantageously provide an exit passageway for the air that is positioned separately from the filling passage 142 such that turbulent airflow does not develop within the filling passage 142 when it is supplying particulate adhesive material into the tank 130.

The filter 170 may be attached to the upper surface of the mounting structure 174. As depicted in FIGS. 3, 5, and 6, the filter 170 includes an upwardly extending section and two openings 172a, 172b. The upwardly extending section of the filter 170 may be parallel or substantially parallel to a longitudinal axis of the upwardly extending conduit section 144 of the filling passage 142. The upwardly extending section may direct air from within the tank 130 towards the openings 172a, 172b. This path of travel of the air is denoted by line 176 in FIG. 6. In certain aspects of the disclosure, the filter 170 may also include filter media (not depicted) that is disposed adjacent or proximate to the openings 172a, 172b, through which air from within the tank 130 travelling upwards through the upwardly extending section of the filter 170 must travel in order to exit through the openings 172a, 172b to the exterior of the melter. The filter media may remove any odors or chemicals that are present in the air prior to it exiting the exterior environment. In other aspects, the openings 172a, 172b of the filter 170 may also direct the air into an enclosed space, conduit, or the like for containing or directing the air to a filtering point prior to its exit to the outside. The openings 172a, 172b may be disposed to one side of the filter 170 such that the air is directed away and to one side of the adhesive melting system 110.

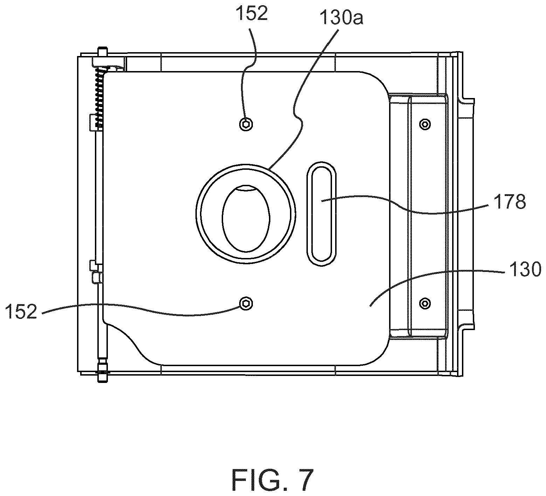

FIG. 7 depicts a bottom view of the lid 132 and its surrounding structure. As depicted in FIG. 7, the lid 132 is in the second position. A top section of the tank 130 includes the inlet opening 130a, which receives the particulate adhesive material from the filling passage 142 (depicted in FIGS. 4A and 4B) when the lid 132 is in the second position. The top section of the tank 130 also includes openings to receive the bolts 152 that secure the mounting structure 174 to the tank 130 of the melter. In addition, the top section of the tank 130 includes an opening 178 that allows air from within the tank to travel upwards into the upwardly extending section of the filter 170.

While the adhesive melting system has been illustrated by specific embodiments thereof, and while the embodiments have been described in considerable detail, it is not intended to restrict or in any way limit the scope of the appended claims to such detail. The various features discussed herein may be used alone or in any combination. Additional advantages and modifications will readily appear to those skilled in the art. The adhesive melting system in its broader aspects is therefore not limited to the specific details, representative apparatus and methods and illustrative examples shown and described. Accordingly, departures may be made from such details without departing from the scope of this application.

## Claims

1. A hot melt adhesive system (10) comprising:
an adhesive supply (16) configured to contain a bulk quantity of particulate hot melt adhesive and having an outlet (20),
an adhesive melter (14) including a chamber (30) with an inlet opening, the adhesive melter (14) configured to melt the particulate hot melt adhesive into a liquid hot melt adhesive, and
a top component (32) including a first portion (32a) configured as a cover to block the inlet opening of the chamber (30) and prevent transfer of heat from the chamber (30) into a filling passage (42) configured to allow ingress of the particulate hot melt adhesive from the adhesive supply (16) into the chamber (30), and a second portion (32b) including the filling passage (42),
**characterized in that** the top component (32) being movable between a first position in which the first portion (32a) of the top component (32) covers the inlet opening of the chamber (30) and the second portion (32b) is out of alignment with the inlet opening of the chamber (30), and a second position in which the first portion (32a) of the top component (32) is out of alignment with the inlet opening of the chamber (30) and the second portion (32b) including the filling passage (42) is aligned with the inlet opening of the chamber (30) such that the particulate hot melt adhesive can be directed from the adhesive supply (16) through the filling passage (42) of the top component (32) and into the chamber (30).

2. The hot melt adhesive system (10) of claim 1, wherein the top component (32) slides between the first position and the second position.

3. The hot melt adhesive system (10) of claim 1, wherein the top component (32) further comprises a main portion (54) secured to the adhesive melter (14), the main portion (54) having a conduit section (58) and the first and second portions (32a, 32b) are movable relative to the conduit section (58) between the first position and the second position, the filling passage (42) being in communication with the conduit section (58) when the top component (32) is in the second position.

4. The hot melt adhesive system (10) of claim 1 wherein the filling passage (42) of the top component (32) is contained in a conduit (44) coupled to the top component (32).

5. The hot melt adhesive system (110) of claim 1, wherein the adhesive melter (14) further comprises an actuator (160) configured to move the top component (132a) between the first position and the second position.

6. The adhesive melter (110) of claim 5, wherein the actuator (160) comprises a pneumatic cylinder (164).

7. The adhesive melter (110) of claim 1, wherein the adhesive melter (110) further comprises a filter (170) configured to vent air from within the adhesive melter (110) to an exterior of the adhesive melter (110).

8. The adhesive melter (110) of claim 7, wherein the filter (170) comprises:
an upwardly extending portion; and
at least one opening (172a, 172b) disposed on a side of the filter (170),
wherein the upwardly extending portion and the at least one opening (172a, 172b) define a curved path of travel for the air.

9. An adhesive melter (14) for a hot melt adhesive system (10), the adhesive melter (14) comprising:
a chamber (30) with an inlet opening adapted to receive particulate hot melt adhesive from a supply (16), the chamber (30) configured to hold the particulate hot melt adhesive as the particulate hot melt adhesive is heated and melted into a liquid hot melt adhesive, and
a top component (32) including a first portion (32a) configured as a cover to block the inlet opening of the chamber (30) and prevent transfer of heat from the chamber (30) into a filling passage (42) configured to allow ingress of the particulate hot melt adhesive from the adhesive supply (16) into the chamber (30), and a second portion (32b) including the filling passage (42),
**characterized in that** the top component (32) being movable between a first position in which the first portion (32a) of the top component (32) covers the inlet opening of the chamber (30) and the second portion (32b) is out of alignment with the inlet opening of the chamber (30), and a second position in which the first portion (32a) of the top component (32) is out of alignment with the inlet opening of the chamber (30) and the second portion (32b) including the filling passage (42) is aligned with the inlet opening of the chamber (30) such that the particulate hot melt adhesive can be directed from the supply (16) through the filling passage (42) of the top component (32) and into the chamber (30).

10. The adhesive melter (14) of claim 9, wherein the top component (32) slides between the first position and the second position.

11. The adhesive melter (14) of claim 9, wherein the top component (32) further comprises a main portion (54) secured to the melter (14), the main portion (54) having a conduit section (58) and the first and second portions (32a, 32b) are movable relative to the conduit section (58) between the first position and the second position, the filling passage (42) being in communication with the conduit section (58) when the top component (32) is in the second position.

12. The adhesive melter (14) of claim 9, wherein the filling passage (42) of the top component (32) is contained in a conduit (44) coupled to the top component (32).

13. The adhesive melter (114) of claim 9, wherein the adhesive melter (114) further comprises an actuator (160) configured to move the top component (132a) between the first position and the second position.

14. The adhesive melter (114) of claim 13, wherein the actuator (160) comprises a pneumatic cylinder (164).

15. The adhesive melter (114) of claim 9, wherein the adhesive melter (114) further comprises a filter (170) configured to vent air from within the adhesive melter (114) to an exterior of the adhesive melter (110).

16. The adhesive melter (110) of claim 15, wherein the filter (170) comprises:
an upwardly extending portion; and
at least one opening (172a, 172b) disposed on a side of the filter (170),
wherein the upwardly extending portion and the at least one opening (172a, 172b) define a curved path of travel for the air.

17. A method of moving particulate hot melt adhesive between an adhesive supply (16) containing a bulk quantity of the particulate hot melt adhesive and a chamber (30) of an adhesive melter (14) for heating and melting the particulate hot melt adhesive into a liquid hot melt adhesive, comprising:
introducing the particulate hot melt adhesive into a filling passage (42) of a top component (32) from the adhesive supply (16) while the top component (32) is in a second position with the filling passage (42) aligned with an inlet opening of the chamber (30);
directing the particulate hot melt adhesive through the filling passage (42) and through the inlet opening of the chamber (30) until the chamber (30) is filled with a desired quantity of particulate hot melt adhesive for operating the adhesive melter (14);
moving the top component (32) from the chamber filling position to a first position in which the top component (32) blocks or reduces convective heat from escaping through the inlet opening of the chamber (30); and
operating the melter (14) to heat and melt the particulate hot melt adhesive while the top component (32) is in the melter operating position.

18. The method of claim 17, wherein moving the top component (32) from the second position to the first position comprises sliding the top component (32) from the second position to the first position.

19. The method of claim 17, further comprising:
moving the top component (32) from the first position to the second position; and
refilling the chamber (30) with a desired quantity of particulate hot melt adhesive by directing the particulate hot melt adhesive through the filling passage (42) and the inlet opening into the chamber (30).

## Patentansprüche

1. Heißschmelzklebstoffsystem (10), aufweisend:
eine Klebstoffversorgung (16), die dazu eingerichtet ist, eine größere Menge von partikelförmigem Heißschmelzklebstoff zu halten, und einen Auslass (20) aufweist,
einen Klebstoffschmelzer (14), enthaltend eine Kammer (30) mit einer Einlassöffnung, wobei der Klebstoffschmelzer (14) dazu eingerichtet ist, den partikelförmigen Heißschmelzklebstoff in einen flüssigen Heißschmelzklebstoff zu schmelzen, und
eine obere Komponente (32), welche einen ersten Abschnitt (32a) enthält, der dazu eingerichtet ist, als eine Abdeckung die Einlassöffnung der Kammer (30) zu blockieren und Wärmetransfer von der Kammer (30) in eine Füllpassage (42) zu verhindern, die dazu eingerichtet ist, einen Eintritt von partikelförmigem Heißschmelzklebstoff aus der Klebstoffversorgung (16) in die Kammer (30) zu ermöglichen, und einen zweiten Abschnitt (32b), der die Füllpassage (42) enthält,
**dadurch gekennzeichnet, dass** die obere Komponente (32) zwischen einer ersten Position, in welcher der erste Abschnitt (32a) der oberen Komponente (32) die Einlassöffnung der Kammer (30) abdeckt und der zweite Abschnitt (32b) nicht mit der Einlassöffnung der Kammer (30) fluchtet, und einer zweiten Position, in welcher der erste Abschnitt (32a) der oberen Komponente (32) nicht mit der Einlassöffnung der Kammer (30) fluchtet und der zweite Abschnitt (32b), der die Füllpassage (42) enthält, mit der Einlassöffnung der Kammer (30) fluchtet, sodass der partikelförmige Heißschmelzklebstoff von der Klebstoffversorgung (16) durch die Füllpassage (42) der oberen Komponente (32) und in die Kammer (30) geführt werden kann, beweglich ist.

2. Das Heißschmelzklebstoffsystem (10) nach Anspruch 1, wobei die obere Komponente (32) zwischen der ersten Position und der zweiten Position gleitet.

3. Das Heißschmelzklebstoffsystem (10) nach Anspruch 1, wobei die obere Komponente (32) weiterhin einen Hauptabschnitt (54) aufweist, der an dem Klebstoffschmelzer (14) gesichert ist, wobei der Hauptabschnitt (54) einen Leitungsabschnitt (58) aufweist, und die ersten und zweiten Abschnitte (32a, 32b) relativ zu dem Leitungsabschnitt (58) zwischen der ersten Position und der zweiten Position beweglich sind, wobei die Füllpassage (42) in Kommunikation mit dem Leitungsabschnitt (58) steht, wenn sich die obere Komponente (32) in der zweiten Position befindet.

4. Das Heißschmelzklebstoffsystem (10) nach Anspruch 1, wobei die Füllpassage (42) der oberen Komponente (32) in einer Leitung (44), die mit der oberen Komponente (32) gekoppelt ist, enthalten ist.

5. Das Heißschmelzklebstoffsystem (110) nach Anspruch 1, wobei der Klebstoffschmelzer (14) weiterhin einen Aktuator (160) aufweist, der dazu eingerichtet ist, die obere Komponente (132a) zwischen der ersten Position und der zweiten Position zu bewegen.

6. Der Klebstoffschmelzer (110) nach Anspruch 5, wobei der Aktuator (160) einen pneumatischen Zylinder (164) aufweist.

7. Der Klebstoffschmelzer (110) nach Anspruch 1, wobei der Klebstoffschmelzer (110) weiterhin einen Filter (170) aufweist, der dazu eingerichtet ist, Luft aus dem Inneren des Klebstoffschmelzers (110) zu einem Äußeren des Klebstoffschmelzers (110) zu ventilieren.

8. Der Klebstoffschmelzer (110) nach Anspruch 7, wobei der Filter (170) aufweist:
einen sich nach oben erstreckenden Abschnitt; und
mindestens eine Öffnung (172a, 172b), angeordnet auf einer Seite des Filters (170), wobei der sich nach oben erstreckende Abschnitt und die mindestens eine Öffnung (172a, 172b) einen gebogenen Strömungspfad für die Luft definieren.

9. Klebstoffschmelzer (14) für ein Heißschmelzklebstoffsystem (10), wobei der Klebstoffschmelzer (14) aufweist:
eine Kammer (30) mit einer Einlassöffnung, die dazu eingerichtet ist, partikelförmigen Heißschmelzklebstoff aus einem Vorrat (16) zu empfangen, wobei die Kammer (30) dazu eingerichtet ist, den partikelförmigen Heißschmelzklebstoff zu halten, während der partikelförmige Heißschmelzklebstoff erwärmt und in flüssigen Heißschmelzklebstoff geschmolzen wird, und
eine obere Komponente (32), welche einen ersten Abschnitt (32a) enthält, der dazu eingerichtet ist, als eine Abdeckung die Einlassöffnung der Kammer (30) zu blockieren und Wärmetransfer von der Kammer (30) in die Füllpassage (42) zu verhindern, die dazu eingerichtet ist, einen Eintritt des partikelförmigen Heißschmelzklebstoffes aus dem Klebstoffvorrat (16) in die Kammer (30) zu ermöglichen, und einen zweiten Abschnitt (32b), der die Füllpassage (42) enthält,
**dadurch gekennzeichnet, dass** die obere Komponente (32) zwischen einer ersten Position, in welcher der erste Abschnitt (32a) der oberen Komponente (32) die Einlassöffnung der Kammer (30) abdeckt und der zweite Abschnitt (32b) nicht mit der Einlassöffnung der Kammer (30) fluchtet, und einer zweiten Position, in welcher der erste Abschnitt (32a) der oberen Komponente (32) nicht mit der Einlassöffnung der Kammer (30) fluchtet und der zweite Abschnitt (32b), der die Füllpassage (42) enthält, mit der Einlassöffnung der Kammer (30) fluchtet, sodass der partikelförmige Heißschmelzklebstoff von der Versorgung (16) durch die Füllpassage (42) der oberen Komponente (32) und in die Kammer (30) geführt werden kann, beweglich ist.

10. Der Klebstoffschmelzer (14) nach Anspruch 9, wobei die obere Komponente (32) zwischen der ersten Position und der zweiten Position gleitet.

11. Der Klebstoffschmelzer (14) nach Anspruch 9, wobei die obere Komponente (32) weiterhin einen Hauptabschnitt (54) aufweist, der an dem Schmelzer (14) gesichert ist, wobei der Hauptabschnitt (54) einen Leitungsabschnitt (58) aufweist und die ersten und zweiten Abschnitte (32a, 32b) relativ zu dem Leitungsabschnitt (58) zwischen der ersten Position und der zweiten Position beweglich sind, wobei die Füllpassage (42) in Kommunikation mit dem Leitungsabschnitt (58) steht, wenn sich die obere Komponente (32) in der zweiten Position befindet.

12. Der Klebstoffschmelzer (14) nach Anspruch 9, wobei die Füllpassage (42) der oberen Komponente (32) in einer Leitung (44), die mit der oberen Komponente (32) gekoppelt ist, enthalten ist.

13. Der Klebstoffschmelzer (114) nach Anspruch 9, wobei der Klebstoffschmelzer (114) weiterhin einen Aktuator (160) aufweist, der dazu eingerichtet ist, die obere Komponente (132a) zwischen der ersten Position und der zweiten Position zu bewegen.

14. Der Klebstoffschmelzer (114) nach Anspruch 13, wobei der Aktuator (160) einen pneumatischen Zylinder (164) aufweist.

15. Der Klebstoffschmelzer (114) nach Anspruch 9, wobei der Klebstoffschmelzer (114) weiterhin einen Filter (170) aufweist, der dazu eingerichtet ist, Luft von dem Inneren des Klebstoffschmelzers (114) zu einem Äußeren des Klebstoffschmelzers (110) zu ventilieren.

16. Der Klebstoffschmelzer (110) nach Anspruch 15, wobei der Filter (170) aufweist:
einen sich nach oben erstreckenden Abschnitt; und
mindestens eine Öffnung (172a, 172b), die auf einer Seite des Filters (170) angeordnet ist,
wobei der sich nach oben erstreckende Abschnitt und die mindestens eine Öffnung (172a, 172b) einen gebogenen Strömungspfad für die Luft definieren.

17. Verfahren zur Bewegung von partikelförmigem Heißschmelzklebstoff zwischen einer Klebstoffversorgung (16), der einen größere Menge von partikelförmigem Heißschmelzklebstoff enthält, und einer Kammer (30) eines Klebstoffschmelzers (14) zum Erwärmen und Schmelzen des partikelförmigen Heißschmelzklebstoffes in einen flüssigen Heißschmelzklebstoff, aufweisend:
Einführen des partikelförmigen Heißschmelzklebstoffes in eine Füllpassage (42) einer oberen Komponente (32) von der Klebstoffversorgung (16), während sich die obere Komponente (32) in einer zweiten Position befindet, bei welcher die Füllpassage (42) mit einer Einlassöffnung der Kammer (30) fluchtet;
Führen des partikelförmigen Heißschmelzklebstoffes durch die Füllpassage (42) und durch die Einlassöffnung der Kammer (30), bis die Kammer (30) mit einer gewünschten Menge von partikelförmigem Heißschmelzklebstoff zum Betrieb des Klebstoffschmelzers (14) gefüllt ist;
Bewegen der oberen Komponente (32) aus der Kammerfüllposition in eine erste Position, in welcher die obere Komponente (32) konvektive Wärme an einem Austreten durch die Einlassöffnung der Kammer (30) hindert oder dieses reduziert; und
Betrieb des Schmelzers (14) zum Erwärmen und Schmelzen des partikelförmigen Heißschmelzklebstoffes, während sich die obere Komponente (32) in der Schmelzerbetriebsposition befindet.

18. Das Verfahren nach Anspruch 17, wobei die Bewegung der oberen Komponente (32) von der zweiten Position in die erste Position ein Gleiten der oberen Komponente (32) von der zweiten Position zu der ersten Position aufweist.

19. Das Verfahren nach Anspruch 17, weiterhin aufweisend:
Bewegen der oberen Komponente (32) aus der ersten Position in die zweite Position; und
Neubefüllen der Kammer (30) mit einer gewünschten Menge von partikelförmigem Heißschmelzklebstoff durch Führen des partikelförmigen Heißschmelzklebstoffes durch die Füllpassage (42) und die Einlassöffnung in die Kammer (30).

## Revendications

1. Système d'adhésif thermofusible (10) comprenant :
une alimentation en adhésif (16) configurée pour contenir une quantité en vrac d'adhésif thermofusible particulaire et ayant un orifice de sortie (20),
un dispositif de fusion d'adhésif (14) comportant une chambre (30) avec une ouverture d'entrée, le dispositif de fusion d'adhésif (14) étant configuré pour faire fondre l'adhésif thermofusible particulaire en un adhésif thermofusible liquide, et
un composant supérieur(32) comportant une première portion (32a) configurée comme un couvercle pour bloquer l'ouverture d'entrée de la chambre (30) et empêcher un transfert de chaleur depuis la chambre (30) dans un passage de remplissage (42) configuré pour permettre l'arrivée de l'adhésif thermofusible particulaire en provenance de l'alimentation en adhésif (16) dans la chambre (30), et une seconde portion (32b) comportant le passage de remplissage (42),
**caractérisé en ce que** le composant supérieur (32) est mobile entre une première position dans laquelle la première portion (32a) du composant supérieur (32) couvre l'ouverture d'entrée de la chambre (30) et la seconde portion (32b) n'est pas alignée avec l'ouverture d'entrée de la chambre (30), et une seconde position dans laquelle la première portion (32a) du composant supérieur (32) n'est pas alignée avec l'ouverture d'entrée de la chambre (30) et la seconde portion (32b) comportant le passage de remplissage (42) est alignée avec l'ouverture d'entrée de la chambre (30) de sorte que l'adhésif thermofusible particulaire puisse être dirigé depuis l'alimentation en adhésif (16) à travers le passage de remplissage (42) du composant supérieur (32) et jusque dans la chambre (30).

2. Système d'adhésif thermofusible (10) selon la revendication 1, dans lequel le composant supérieur (32) coulisse entre la première position et la seconde position.

3. Système d'adhésif thermofusible (10) selon la revendication 1, dans lequel le composant supérieur (32) comprend en outre une portion principale (54) arrimée au dispositif de fusion d'adhésif (14), la portion principale (54) ayant une section de conduit (58) et les première et seconde portions (32a, 32b) sont mobiles par rapport à la section de conduit (58) entre la première position et la seconde position, le passage de remplissage (42) étant en communication avec la section de conduit (58) lorsque le composant supérieur (32) est dans la seconde position.

4. Système d'adhésif thermofusible (10) selon la revendication 1, dans lequel le passage de remplissage (42) du composant supérieur (32) est contenu dans un conduit (44) couplé au composant supérieur (32).

5. Système d'adhésif thermofusible (110) selon la revendication 1, dans lequel le dispositif de fusion d'adhésif (14) comprend en outre un actionneur (160) configuré pour déplacer le composant supérieur (132a) entre la première position et la seconde position.

6. Dispositif de fusion d'adhésif (110) selon la revendication 5, dans lequel l'actionneur (160) comprend un vérin pneumatique (164).

7. Dispositif de fusion d'adhésif (110) selon la revendication 1, dans lequel le dispositif de fusion d'adhésif (110) comprend en outre un filtre (170) configuré pour purger de l'air depuis l'intérieur du dispositif de fusion d'adhésif (110) jusqu'à l'extérieur du dispositif de fusion d'adhésif (110).

8. Dispositif de fusion d'adhésif (110) selon la revendication 7, dans lequel le filtre (170) comprend :
une portion s'étendant vers le haut ; et
au moins une ouverture (172a, 172b) disposée sur un côté du filtre (170),
dans lequel la portion s'étendant vers le haut et l'au moins une ouverture (172a, 172b) définissent un chemin de circulation incurvé pour l'air.

9. Dispositif de fusion d'adhésif (14) pour système d'adhésif thermofusible (10), le dispositif de fusion d'adhésif (14) comprenant :
une chambre (30) avec une ouverture d'entrée adaptée pour recevoir un adhésif thermofusible particulaire en provenance d'une alimentation (16), la chambre (30) étant configurée pour conserver l'adhésif thermofusible particulaire lorsque l'adhésif thermofusible particulaire est chauffé et fondu en un adhésif thermofusible liquide, et
un composant supérieur (32) comportant une première portion (32a) configurée comme un couvercle pour bloquer l'ouverture d'entrée de la chambre (30) et empêcher un transfert de chaleur depuis la chambre (30) dans un passage de remplissage (42) configuré pour permettre l'arrivée de l'adhésif thermofusible particulaire en provenance de l'alimentation en adhésif (16) jusque dans la chambre (30), et une seconde portion (32b) comportant le passage de remplissage (42),
**caractérisé en ce que** le composant supérieur (32) est mobile entre une première position dans laquelle la première portion (32a) du composant supérieur (32) couvre l'ouverture d'entrée de la chambre (30) et la seconde portion (32b) n'est pas alignée avec l'ouverture d'entrée de la chambre (30), et une seconde position dans laquelle la première portion (32a) du composant supérieur (32) n'est pas alignée avec l'ouverture d'entrée de la chambre (30) et la seconde portion (32b) comportant le passage de remplissage (42) est alignée avec l'ouverture d'entrée de la chambre (30) de sorte que l'adhésif thermofusible particulaire puisse être dirigé depuis l'alimentation (16) à travers le passage de remplissage (42) du composant supérieur (32) et jusque dans la chambre (30).

10. Dispositif de fusion d'adhésif (14) selon la revendication 9, dans lequel le composant supérieur (32) coulisse entre la première position et la seconde position.

11. Dispositif de fusion d'adhésif (14) selon la revendication 9, dans lequel le composant supérieur (32) comprend en outre une portion principale (54) arrimée au dispositif de fusion (14), la portion principale (54) ayant une section de conduit (58) et les première et seconde portions (32a, 32b) sont mobiles par rapport à la section de conduit (58) entre la première position et la seconde position, le passage de remplissage (42) étant en communication avec la section de conduit (58) lorsque le composant supérieur (32) est dans la seconde position.

12. Dispositif de fusion d'adhésif (14) selon la revendication 9, dans lequel le passage de remplissage (42) du composant supérieur (32) est contenu dans un conduit (44) couplé au composant supérieur (32).

13. Dispositif de fusion d'adhésif (114) selon la revendication 9, dans lequel le dispositif de fusion d'adhésif (114) comprend en outre un actionneur (160) configuré pour déplacer le composant supérieur (132a) entre la première position et la seconde position.

14. Dispositif de fusion d'adhésif (114) selon la revendication 13, dans lequel l'actionneur (160) comprend un vérin pneumatique (164).

15. Dispositif de fusion d'adhésif (114) selon la revendication 9, dans lequel le dispositif de fusion d'adhésif (114) comprend en outre un filtre (170) configuré pour purger de l'air depuis l'intérieur du dispositif de fusion d'adhésif (114) jusqu'à un extérieur du dispositif de fusion d'adhésif (110).

16. Dispositif de fusion d'adhésif (110) selon la revendication 15, dans lequel le filtre (170) comprend :
une portion s'étendant vers le haut ; et
au moins une ouverture (172a, 172b) disposée sur un côté du filtre (170),
dans lequel la portion s'étendant vers le haut et l'au moins une ouverture (172a, 172b) définissent un chemin de circulation incurvé pour l'air.

17. Procédé de déplacement d'adhésif thermofusible particulaire entre une alimentation en adhésif (16) contenant une quantité en vrac de l'adhésif thermofusible particulaire et une chambre (30) d'un dispositif de fusion d'adhésif (14) pour chauffer et faire fondre l'adhésif thermofusible particulaire en un adhésif thermofusible liquide, comprenant :
l'introduction de l'adhésif thermofusible particulaire dans un passage de remplissage (42) d'un composant supérieur (32) depuis l'alimentation en adhésif (16) tandis que le composant supérieur (32) est dans une seconde position avec le passage de remplissage (42) aligné avec une ouverture d'entrée de la chambre (30) ;
le fait de diriger l'adhésif thermofusible particulaire à travers le passage de remplissage (42) et à travers l'ouverture d'entrée de la chambre (30) jusqu'à ce que la chambre (30) soit remplie d'une quantité souhaitée d'adhésif thermofusible particulaire pour faire fonctionner le dispositif de fusion d'adhésif (14) ;
le déplacement du composant supérieur (32) de la position de remplissage de chambre à une première position dans laquelle le composant supérieur (32) bloque ou réduit une échappée de chaleur de convexion à travers l'ouverture d'entrée de la chambre (30) ; et
le fonctionnement du dispositif de fusion (14) pour chauffer et faire fondre l'adhésif thermofusible particulaire tandis que le composant supérieur (32) est dans la position de fonctionnement de dispositif de fusion.

18. Procédé selon la revendication 17, dans lequel le déplacement du composant supérieur (32) de la seconde position à la première position comprend le coulissement du composant supérieur (32) de la seconde position à la première position.

19. Procédé selon la revendication 17, comprenant en outre :
le déplacement du composant supérieur (32) de la première position à la seconde position ; et
le remplissage à nouveau de la chambre (30) avec une quantité souhaitée d'adhésif thermofusible particulaire en dirigeant l'adhésif thermofusible particulaire à travers le passage de remplissage (42) et l'ouverture d'entrée jusque dans la chambre (30).
